Europäisches Patentamt

European Patent Office

Office européen des brevets

(19)

(11) Publication number: **0 070 338**
A1

# EUROPEAN PATENT APPLICATION

(21) Application number: 81303335.4

(22) Date of filing: 21.07.81

(51) Int. Cl.³: **B 02 C 2/00**, B 02 C 23/00,
C 08 L 75/04

(43) Date of publication of application: 26.01.83
Bulletin 83/4

(84) Designated Contracting States: **AT BE CH DE FR IT LI NL SE**

(71) Applicant: **MAZEL (1980) LIMITED, 9 Lansdowne Terrace Gosforth, Newcastle-upon-Tyne NE3 1HN (GB)**

(72) Inventor: **Hare, John Thomas, 70 Highburn Stonelaw Grange, Cramlington Northumberland (GB)**

(74) Representative: **Cropp, John Anthony David et al, MATHYS & SQUIRE 10 Fleet Street, London, EC4Y 1AY (GB)**

(54) **Improvements in or relating to crushing, material-reducing and like machines.**

(57) A crushing part or component of a gyratory grinder or other crushing, grinding or material-reducing machine is provided with a shock-absorbing backing material (3) which has improved flow properties at low ambient temperatures and is formed of a filled polyurethane resin composition derived from a cold-curing liquid system formed by mixing together (a) a liquid material comprising the polyol component and at least part of the filler in the composition and wherein the polyol component comprises (i) one or more polyether polyols each having at least two hydroxyl groups per molecule, the average number of hydroxyl groups per molecule being more than 2 but not more than 3.3, (ii) one or more polyols each having at least two hydroxyl groups per molecule and containing both ether and ester groups, the average number of hydroxyl groups per molecule being more than 2 but not more than 3.3, and (iii) at least one ester of a long chain hydroxylated fatty acid having at least 10 carbon atoms (including the carboxylic carbon atom); (i) and (ii) being present in amounts such that (i) provides from 1.5 to 3.5 hydroxy groups for each hydroxy group provided by (ii), and (iii) being present in an amount of 2 to 10% by weight of said liquid material, and (b) at least one aromatic polyisocyanate in an amount such that there is an excess of isocyanate groups over hydroxyl groups in the cold-curing system, and said liquid material also includes a quaternary ammonium smectite, as defined, in an amount of from 0.2% to 2% by weight of the liquid material.

This invention relates to the provision of a shock-absorbing backing material for the crushing parts or components of crushing, material-reducing, grinding and like machines.

In crushing machines either of the moving jaw or revolving cone type, it is known to provide the crushing parts or components which are subject to wear, e.g. the jaws of stone crushers and gyratory type crushers, with a backing of shock-absorbing material. This material is generally provided by pouring a suitably formulated liquid into the cavity between the head, mantle or jaw backing and the part which is subject to wear, e.g. the jaw, and allowing the liquid to set in situ.

In the past, zinc or solder has been used as the backing material but more recently there has been a trend towards cold-curing synthetic resins whose use obviates many of the disadvantages associated with having to handle metals in the molten state.

One preferred class of materials comprises the filled polyurethane resins such as described in our British Patent Specifications 1148406 and 1502279. These materials are obtained by mixing together (a) a liquid component containing the polyol and (b) a polyisocyanate component, to form a cold-curing liquid system which is then immediately poured into the cavity where it sets in situ within a short time after mixing. The polyol-containing component usually also contains the filler material and any catalyst that is used to accelerate the setting action.

While these filled polyurethane resins are widely employed and have been found to be generally satisfactory in use, it would be advantageous to improve the flow properties, especially at low ambient temperatures, of the cold-curing liquid system. However, any such improvement should not increase any tendency (hereinafter referred to as the "settling-out tendency") of the solid filler to settle out from the liquid component containing it, during storage and transportation thereof, and should not adversely affect the pot life of the cold-curing system or the compressive strength and flexibility of the cured product.

In accordance with the present invention, the filled polyurethane resin composition is derived from a cold-curing liquid system formed by mixing together (a) a liquid material comprising the polyol component and at least part and preferably all or substantially all of the filler in the composition and wherein the polyol component comprises (i) one or more polyether polyols each having at least two hydroxyl groups per molecule, the average number of hydroxyl groups per molecule being more than 2 but not more than 3.3, (ii) one or more polyols each having at least two hydroxyl groups per molecule and containing both ether and ester groups, the average number of hydroxyl groups per molecule being more than 2 but not more than 3.3, and (iii) at least one ester of a long chain hydroxylated         fatty acid having at least 10 and preferably 12 to 14 carbon atoms (including the carboxylic carbon atom);  (i) and (ii) being present in amounts such that (i) provides from 1.5 to 3.5 hydroxy groups for each hydroxy group provided by (ii), and (iii) being present in an amount of 2 to 10% by weight of said liquid material, and (b) at least one aromatic polyisocyanate in an amount such that there is an excess of isocyanate groups over hydroxyl groups in the cold-curing system, and said liquid material also includes a quaternary ammonium smectite, as hereinafter defined, in an amount of from 0.2% to 2% by weight of the liquid material.

The presence in combination of the ester and the quaternary ammonium smectite in the liquid material within the strict limits of the ranges specified herein produces on admixture with.the polyisocyanate constituent a cold-curing system having improved flow properties as compared with previsouly described polyurethane-based cold-curing systems at comparable levels of solids content and this improvement can be obtained without any increase in the tendency of the filler in the liquid material to settle out during transport and/or storage. In fact, in general the liquid materials employed in the present invention show a reduced tendency to settling-out of the solids materials therein even though the viscosity of the cold-curing system is reduced. Moreover, any solids that do settle out on storage or transport tend to be more easily redispersed. Furthermore these advantages can be gained without any significant adverse effect upon the pot life of the cold curing system or the compressive strength or flexibility of the cured product.

Preferably, the proportions of constituent (i) and the constituent (ii) are such that the former provides approximately 2 to 3 hydroxyl groups for each hydroxyl group provided by the latter. The molecular weights of constituents (i) and (ii) are preferably at least 500 and may be greater than 1000, e.g. up to
2000 or more. However, they preferably contain at least 2½% to
3% OH, e.g. from 4 to 20% OH, by weight.

Constituent (iii) comprises at least one ester of a
hydroxylated long chain fatty acid which may be saturated or
unsaturated provided that it contains at least one, and preferably
only one, hydroxyl group capable of reacting with an isocyanate
to form a urethane. The ester may be of a monohydric alcohol
or a polyhydric alcohol and is preferably a glyceride. One example
which is preferred on grounds of ready availability and cost
is caster oil.

The aromatic polyisocyanate may be, for example, one
or a mixture of toluene diisocyanate isomers or a compound or compounds
containing two or more isocyanatophenyl groups, e.g. a bis
(isocyanatophenyl) alkane such as bis (4-isocyanatophenyl) methane
or 1,1-bis (4-isocyanatophenyl) propane.

Although other filler materials such as carbonaceous
material and finely divided metals, e.g. aluminium and/or steel
powder, may be used, it is preferred that the filler, or at least
a major proportion thereof, is of mineral origin. Examples of such
fillers are finely divided slate, clays, sands, metal oxides,
metal salts or inorganic acids, e.g. barium sulphate, calcined
metal salts, e.g. calcined malachite, and finely divided glass,
e.g. fibrous glass or powdered glass. The filler preferably forms
a major proportion by weight of the liquid material. However, at high levels of filler, dispersion of the filler within the other components of the liquid material becomes increasingly difficult and for this reason the use of filler in amounts exceeding 85% by weight of the liquid material is not advised. The preferred range is from 60 to 80% by weight of the liquid material.

The liquid material also includes a quaternary ammonium smectite by which is meant a smectic clay mineral at least part of the metal cation content of which has been replaced by quaternary ammonium groups. Examples of smectic clay minerals include beidellite, hectorite, montmorillonite, nontronite, saponite and sauconite. The quaternary ammonium cation preferably contains at least one long chain (e.g. containing at least 10 carbon atoms in the chain) alkyl group; e.g. as in decyl, undecyl, dodecyl, hexadecyl, octadecyl, cetyl and eicosyl. The remaining valencies of the quaternary ammonium cation may be alkyl or aralkyl groups, e.g. methyl, ethyl, propyl, isopropyl, n-butyl, isobutyl, t-butyl, amyl and benzyl. This quaternary ammonium smectite must be present in an amount of from 0.2 to 2% by weight of the liquid material.

Within the ranges specified above, the amounts of ester and quaternary ammonium smectite employed for the best results are inter-related and depend also upon the concentration of filler in the liquid material. Increasing the concentration of the filler in the liquid material increases the viscosity of the cold-curing system but this can be offset by increasing the concentration of the ester. However, such increase tends to increase the tendency of the filler to settle out and moreover using too much ester can lead to undesirable phase separation of the liquid phase of the liquid material and should be avoided. In general, ester concentrations greater than 7% by weight of the liquid material should not be used and the preferred range of concentration is 3 to 7% by weight of the liquid material comprising the polyol component and the filler. For this reason, it is preferred to avoid filler concentrations much above 80% by weight of the liquid material. Increasing the quantity of the quaternary ammonium smectite reduces the tendency of the filler to settle out but markedly increases the viscosity of the liquid material; however, very small amounts of the smectite are efficient in reducing the tendency of the filler to settle out and in general only from 0.5 to 1.5% preferably 0.5 to 1% by weight of this component is required and it is preferred to use the minimum that is effective. It is preferred that the viscosity of the filler-containing liquid material measured using a Brookfield Viscometer, Spindle 4, Speed 5 at $25^{o}C$ is 160-190 poises.

Other additives may also be included in the cold-curing system and, if employed, are generally incorporated in the liquid material. Examples are accelerators for the resin-forming reaction and dehydrators which may be, for example, materials which react with moisture or which physically adsorb or absorb it, e.g. molecular sieves such as zeolites.

The liquid material and the polyisocyanate constituent are mixed together just before use because the curing reaction, which eventually results in the polyol components and the polyisocyanate constituent forming a solid mass, commences quite soon after contact between these materials. If any of the components of the liquid material are incompatible with each other, they should not be mixed together until just before mixture of the liquid material with the polyisocyanate constituent.

Suitably, the filler material, additives if any, and polyether polyol are first mixed together and then the other two polyol constituents are added to this mixture, preferably as a preformed mixture, to form the liquid material.

In order to facilitate rapid removal of the metal portion when worn from a machine, a release agent such as silicone oil can be applied to the wearable metal portion prior to the application of the backing material, so as to prevent adherence of the backing material to the metal portion.

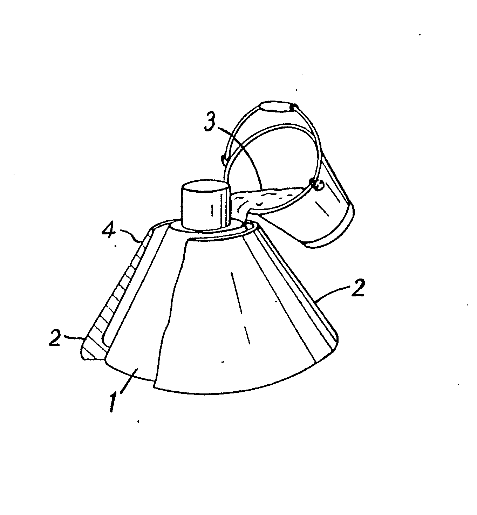

The backing material is especially suitable for use with machine parts and components used in gyratory crushers. An example of the machine part or component in accordance with the invention for use in a gyratory crusher is shown in the accompanying drawing which is a part cut-away view of a gyratory crusher having a wearable metal portion.

The drawing shows part of a crushing head or inner core 1 and an outer mantle 2. The crushing head 1 has a lining of wear resistant material such as steel or a manganese steel alloy

- 8 -

on its surface. The ingredients forming the backing material are mixed to form a liquid material 3, which is then poured into the cavity between the head and the mantle where it sets to form a solid backing material 4.

In operation the mantle 2 is placed over the head 1, leaving a space between the two components. The ingredients forming the backing material are mixed to form the liquid material 3 which is then poured into the space until it is completely filled, and sets therein to form a solid backing material 4. If desired, a release agent such as silicone oil can be applied to the head 1 to prevent adherence of the backing material 4 thereto. The same release agent can at the same time be applied to any bolts used, to prevent adherence.

The invention is now illustrated by the following Examples in which all parts and percentages are by weight.

### Example 1

A liquid material A was prepared by mixing together

1. Branched polyether polyols having approximately three -OH groups per molecule and an OH content of approximately 11.5% by weight (UGIPOL 3541)                    12.65 parts

2. Branched polyalcohols containing ether and ester groups and having approximately three -OH groups per molecule and an OH content of approximately 5% (UGIPOL 1010)                    12.65 parts

| 3. | Filler: Barytes (up to 100 mesh) | 69.0 parts |
|---|---|---|
| 4. | Zinc Naphthenate | 0.5 part |
| 5. | Zeolith T. Paste (Bayer UK) | 5.2 parts |
| | | Total  100.0 parts |

The cold-curing mixture obtained by mixing 4.2 kg of the liquid material with 0.8kg of an aromatic polyisocyanate containing approximately 30% by weight NCO has a pot life of approximately 40 minutes at 18-20°C and on curing provides a backing material with acceptable compressive strength and flexibility. However said cold-curing mixture was not readily pourable and it was found that the viscosity of the liquid material, prior to mixing with the polyisocyanate, was too high at 216 poises measured using a Brookfield Viscometer with Spindle No. 4 at Speed 5 at 25°C.

A second liquid material B was formed by replacing 1.0 part of the filler with 1.0 part of Bentone 27, a quaternary ammonium smectite marketed by NL Industries Inc of Hightstown, N.J, U S A and including 4 parts of caster oil having the following properties

| $I_2$ value | 82-90 |
|---|---|
| acid value | 2.0 max |
| S.G. | 0.968-0.965 |
| SAP value | 177-187 |
| R.I @ 20°C | 1.4771-1.4810 |
| $H_2O$ content | 0.001% |

The liquid material B had a viscosity, measured as above, of only 170 and on mixing in the same quantities with the polyisocyanate produced a cold curing mixture of improved pourability and substantially unchanged pot-life. The compressive strength and flexibility of the backing material obtained from the cold curing mixture were substantially unchanged.

When samples of materials A and B were left to stand, the rate at which a clear upper phase developed in B was less than that of A, indicating a lower rate of settling out of the solids content despite the lower viscosity. The solids that had settled out in B were easily redispersed by stirring.

EXAMPLES 2

The composition of liquid material A was modified by increasing the amount of filler to 75.0 parts and reducing the amounts of components 1 and 2 to 9.65 parts each. The liquid so formed had an unacceptably high viscosity of 524 poises.

This composition was then further modified by replacing 1.5 parts of the filler by an equal weight of Bentone 27 and adding 5.0 parts of the caster oil used in Example 1. The liquid material so obtained had a viscosity of only 184 poises and on mixing with 145 parts of the aromatic polyisocyanate employed in Example 1 provided a cold-curing mixture having adequate pourability. The pot life of the cold curing mixture and the compressive strength and flexibility of the backing material obtained from it were not substantially different from those of liquid material A.

The rate at which solids settled out from the second composition was observed to be lower than that observed for the first composition.

CLAIMS

1.      A machine part or component for use in crushing, material-reducing, grinding and like machines, including a wearable metal portion and a layer of shock-absorbing backing material in close contact therewith in which said backing material comprises a filled polyurethane resin composition derived from a cold-curing liquid system formed by mixing together (a) a liquid material comprising the polyol component and at least part of the filler in the composition and wherein the polyol component comprises (i) one or more polyether polyols each having at least two hydroxyl groups per molecule, the average number of hydroxyl groups per molecule being more than 2 but not more than 3.3, (ii) one or more polyols each having at least two hydroxyl groups per molecule and containing both ether and ester groups, the average number of hydroxyl groups per molecule being more than 2 but not more than 3.3, and (iii) at least one ester of a long chain hydroxylated fatty acid having at least 10 carbon atoms (including the carboxylic carbon atom); (i) and (ii) being present in amounts such that (i) provides from 1.5 to 3.5 hydroxy groups for each hydroxy group provided by (ii), and (iii) being present in an amount of 2 to 10% by weight of said liquid material, and (b) at least one aromatic polyisocyanate in an amount such that there is an excess of isocyanate groups over hydroxyl groups in the cold-curing system, and said liquid material also includes a quaternary ammonium smectite, as herein defined, in an amount of from 0.2% to 2% by weight of the liquid material.

2.      A machine part or component as claimed in claim 1 in which the hydroxylated long chain fatty acid has 12 to 14 carbon atoms, including the carboxylic carbon atom.

3.      A machine part or component as claimed in claim 1 or claim 2 in which the proportions of constituents (i) and (ii) in the composition are such that (i) provides approximately 2 to 3 hydroxyl groups for each hydroxyl group provided by (ii).

4.      A machine part or component as claimed in any one of claims 1 to 3 in which each of constituents (i) and (ii) has a molecular weight of at least 500 and contains at least 2½% OH, by weight.

5.      A machine part or component as claimed in any one of claims 1 to 4 in which constituent (iii) comprises a glyceride.

6.      A machine part or component as claimed in claim 5 in which constituent (iii) comprises caster oil.

7.      A machine part or component as claimed in any one of claims 1 to 6 in which the filler forms a major part of the liquid material, by weight.

8.      A machine part or component as claimed in claim 7 in which the filler forms from 60 to 80% by weight of the liquid material.

9.      A machine part or component as claimed in any one of claims 1 to 8 in which constituent (iii) is present in an amount of 3 to 7% by weight of the liquid material comprising the polyol component and the filler.

10.     A machine part or component as claimed in any one of claims 1 to 9 in which the quaternary ammonium smectite is present in an amount of 0.5 to 1.5 % by weight of the liquid material.

11.     A machine part or component as claimed in any one of claims 1 to 10 in which the viscosity of the liquid material comprising polyol component, filler and quaternary ammonium smectite, measured using a Brookfield Viscometer, Spindle 4, Speed 5 at 25°C is 160 to 190 poises.

European Patent Office

**EUROPEAN SEARCH REPORT**

0070338

Application number

EP 81 30 3335

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | KIRK-OTHMER, ENCYCLOPEDIA OF CHEMICAL TECHNOLOGY, 2nd edition, vol. 4, pages 30-34. *Page 31, paragraph 3,5; page 32, paragraph 2; page 33, paragraph 8, page 34, paragraph 1* | 1 | B 02 C 2/00 B 02 C 23/00 C 08 L 75/04 |
| Y,D | US-A-4 042 182 (WILLIAMSON) *Whole document; especially claims 1,8* & GBA 1502279 & CAA 1060414 | 1,7,8 | |
| Y | US-A-2 642 403 (SIMON) *Column 1, line 52 - column 2, line 1; column 2, lines 13-18; column 6, line 33 - column 7, line 8; column 7, lines 27,31; column 8, line 3* | 1 | |
| Y | US-A-3 585 162 (SAPP) *Whole document; especially column 1, lines 39-47; column 3, lines 6,7,12-27* | 1,4,8 | TECHNICAL FIELDS SEARCHED (Int. Cl. 3) B 02 C C 08 L |
| A | US-A-3 974 125 (OSWALD) *Column 1, line 40 - column 2, line 28* | 1,10, 11 | |
| A | US-A-4 240 951 (MOLL) *Whole document* | 1,10, 11 | |

·/·

The present search report has been drawn up for all claims

| Place of search | Date of completion of the search | Examiner |
|---|---|---|
| THE HAGUE | 31-03-1982 | AST W.O. |

## DOCUMENTS CONSIDERED TO BE RELEVANT

Page  2

| Category | Citation of document with indication, where appropriate, of relevant passages | Relevant to claim | CLASSIFICATION OF THE APPLICATION (Int. Cl. ³) |
|---|---|---|---|
| A | US-A-3 505 275  (SATO) <br> *Column 1, line 25* | 1,5,6 | |
| | --- | | |
| A | US-A-2 970 775  (CHAPMAN) | 1 | |
| | ----- | | |
| | | | |
| | | | TECHNICAL FIELDS SEARCHED (Int. Cl. ³) |

The present search report has been drawn up for all claims

| Place of search <br> THE HAGUE | Date of completion of the search <br> 31-03-1982 | Examiner <br> AST W.O. |
|---|---|---|